# NEUE EUROPÄISCHE PATENTSCHRIFT

(11) **EP 1 385 390 B2**
(45) Veröffentlichungstag und Bekanntmachung des Hinweises auf die Entscheidung über den Einspruch: **20.04.2011**
(45) Hinweis auf die Patenterteilung: 17.01.2007
(21) Anmeldenummer: 02716637.0
(22) Anmeldetag: 06.03.2002
(51) Int. Cl.: A23G 1/20, A23G 3/02

(54) **HERSTELLUNG EINES SCHALENARTIG GEFORMTEN VERZEHRGUTES AUS EINER FETTHALTIGEN MASSE**
PRODUCTION OF A SHELL-LIKE FORMED CONSUMABLE ITEM FROM A FAT-CONTAINING MASS
PRODUCTION D'UN ARTICLE CONSOMMABLE FA ONNE DE TYPE COQUILLE A PARTIR D'UNE MASSE CONTENANT DE LA MATIERE GRASSE

(30) Priorität: 09.05.2001 DE 10122548
(43) Veröffentlichungstag der Anmeldung: 04.02.2004
(73) Patentinhaber: Bühler Bindler GmbH, 51702 Bergneustadt (DE)
(72) Erfinder: KLÄS, Dirk, 51702 Bergneustadt (DE)
(74) Vertreter: Wilming, Martin
(86) Internationale Anmeldenummer: PCT/DE2002/000806
(87) Internationale Veröffentlichungsnummer: WO 2002/089595

(56) Entgegenhaltungen:
- EP-A- 0 589 820
- WO-A-98/52425
- WO-A-99/34685
- DE-A1- 4 241 610
- DE-B- 1 113 865
- DE-B- 1 145 467
- DE-C1- 3 734 626
- US-A- 6 135 016
- Schreiben der Firma Gebr. Bindler Maschinenfabrik GmbH & Co. KG, Bergneustadt (Verkäufer) vom 07.04.2000 an die Firma Rübezahl Koch Schokoladen J.P. Cersovsky GmbH, Dettingen-Teck (Käufer), enthaltend eine Auftragsbestätigung Nr. 3248 A CHOCOROBOT 620.
- Einspruchsschriftsatz der Firma Bühler GmbH, Braunschweig gegen das deutsche Patent Nr. 10 2005 018 417 der Firma Winkler & Dünnebier Süsswarenmaschinen GmbH.
- Konstruktionszeichnung eines Kaltstempelblocks der Firma Gebr. Bindler Maschinenfabrik GmbH & Co. KG, Bergneustadt (Datum unlesbar). Die Konstruktionszeichnung wurde ebenfalls von der Firma Bühler GmbH, Braunschweig in dem unter E1 erwähnten Einspruchsverfahren vorgelegt.
- Bartusch W.: "Der Einfluss von Rüttelstössen auf die Fliesseigenschaften von Schokoladenmassen" aus der Zeitschrift "Fette . Seifen . Anstrichmittel", 63. Jahrgang, Nr. 8, 1961, S. 721-729.
- Zeitschrift "Süsswaren", Ausgabe 9/1995, Titelseite, Inhaltsverzeichnis (S.4) und S. 12-19.

## Beschreibung

Die Erfindung bezieht sich auf ein Verfahren und eine Vorrichtung zur Herstellung eines schalenartig geformten Verzehrgutes aus einer fetthaltigen Masse, insbesondere einer kakaohaltigen bzw. schokoladeartigen Fettmasse, gemäss dem Oberbegriff der Ansprüche 1 bzw. 21.

Verfahren und Vorrichtungen zur Herstellung schalenartig geformter Schokoladenartikel sind bekannt. So offenbart z.B. die EP 0 589 820 B1 ein Verfahren und eine Vorrichtung zum Herstellen von Aussenschalen aus fetthaltigen, schokoladenähnlichen Massen, insbesondere für Schokoladenartikel. Dabei wird eine Alveole (ein Formhohlraum) mit temperierter schokoladenähnlicher Masse befüllt, die unter Kristallisation zur Bildung der Aussenform der Schale von der Alveole aus einwärts erstarrt, wobei die Alveole eine niedrigere Temperatur als die der temperierten Masse hat. Unmittelbar nach dem Einfüllen der Masse in die Alveole wird ein Kühlkörper mit einer Temperatur unter 0°C in die Masse abgesenkt und während eines vorgegebenen Zeitraums in völlig eingetauchter Stellung in der Masse gehalten, so dass ein vorgegebenes Schalenvolumen zwischen dem Kühlkörper und der Alveole bestimmt wird.

Bei dieser Vorgehensweise kann jedoch nicht garantiert werden, dass die in die Alveole eingefüllte fetthaltige Masse frei von Lufteinschlüssen ist. Derartige Lufteinschlüsse können z.B. im Falle temperierter Schokoladenmasse in mehr oder weniger grossen und mehr oder weniger gleichmässig verteilten Luftblasen in der geschmolzenen Fettmasse vorliegen. Sie können z.B. schon in der temperierten Schokoladenmasse im Vorratsbehälter vor dem Einfüllen in die Alveole enthalten sein oder stammen aus der Umgebungsluft beim Einfüllen der Schokoladenmasse in die Alveole.

Die WO 98/52425 beschreibt ein Verfahren und eine Vorrichtung zur Herstellung schalenartig geformter Schokoladenartikel gemäss dem Oberbegriff von Anspruch 1 bzw. von Anspruch 21.

Auch die US 6,135,016 beschreibt eine Anlage zur Herstellung von Schokoladenartikeln mit einem Vibrationsabschnitt zum vibrieren von mit flüssiger Schokolade gefüllten Schalen.

Ausserdem kann es je nach Beschaffenheit der zu verarbeitenden fetthaltigen Masse auch vorkommen, dass die in die Alveole gefüllte Masse nicht gleichmässig in der Alveole verteilt wird.

Sowohl Lufteinschlüsse in der fetthaltigen Masse als auch eine ungleichmässige Verteilung der Masse in der Alveole können zu einer Beeinträchtigung der Qualität des nach dem Absenken des Kühlkörpers in die flüssige Masse gebildeten schalenförmig geformten Verzehrgutes führen, wie z.B. uneinheitliche Schalendicke bis hin zu Löchern in der Schale, ungleichmässiger Schalenrand, etc.

Der Erfindung liegt daher die Aufgabe zugrunde, ein Verfahren und eine entsprechende Vorrichtung zur Herstellung eines schalenartig geformten Verzehrgutes aus einer fetthaltigen Masse, insbesondere einer kakaohaltigen bzw. schokoladeartigen Fettmasse, bereitzustellen, bei dem bzw. der die eingangs genannten Unzulänglichkeiten weitgehend vermieden werden.

Diese Aufgabe wird erfindungsgemäss gelöst, indem man bei dem eingangs beschriebenen Verfahren des Standes der Technik nach dem Befüllen der Alveole und vor dem Eintauchen des Kühlkörpers die fliessfähige temperierte Fettmasse während einer bestimmten Vibrationsdauer in Vibration versetzt, dadurch gekennzeichnet, dass die anregende Vibrationsfrequenz etwa denselben Wert wie eine Resonanzfrequenz der flüssigen Masse in der Alveole hat.

Vorrichtungsmässig wird diese Aufgabe gelöst, indem bei einer Vorrichtung des Stands der Technik ein Vibrationsmittel vorgesehen wird, mit dem die fetthaltige Masse in Vibration versetzt werden kann, dadurch gekennzeichnet, dass das Vibrationsmittel mit veränderbarer Frequenz betreibbar ist.

Ferner ist das Vibrationsmittel so ausgelegt, dass die Vibrationsfrequenz mehrere Frequenzbereiche durchlaufen kann, in denen eine Resonanzfreqenz der Form mit der mindestens einen Alveole liegt. Ebenfalls möglich ist, dass das Vibrastionsmittel mit der Luft über der Alveole in geeigneter Weise derart gekoppelt ist, dass die Vibrationen auf die Luft und dann über die Luft auf die Fettmasse in der Alveole übertragbar sind.

Durch das erfindungsgemässe Verfahren wird noch vor dem Absenken des Kühlköpers, d.h. vor dem eigentlichen Schritt des "Kaltstempelns", eine möglichst gleichmässige Verteilung der Masse in der Alveole erzielt. Ausserdem findet eine zumindest weitgehende Entlüftung der Masse vor dem eigentlichen Kristallisations- und Formungsschritt statt.

Vorzugsweise wird die Vibration der fliessfähigen temperierten Fettmasse in den Alveolen der Form durch Vibrieren der Form erzeugt, die dann ihre Vibration vollständig auf die in ihr enthaltene Masse überträgt. Alternativ oder ergänzend kann die Vibration der fliessfähigen temperierten Fettmasse in den Alveolen auch durch Vibrieren der Luft über den Alveolen erzeugt werden, wodurch die Vibration dann über die Luft auf die Masse in der Alveole übertragen wird.

Je nach Beschaffenheit der zu verarbeitenden Masse kann es vorteilhaft sein, einerseits die Vibration während der Vibrationsdauer mit einem Frequenzverlauf durchzuführen, der sich von einer minimalen Frequenz zu Beginn der Vibrationsdauer zu einer maximalen Frequenz am Ende der Vibrationsdauer entwickelt, oder aber die Vibration während der Vibrationsdauer mit einem Frequenzverlauf durchzuführen, der sich von einer maximalen Frequenz zu Beginn der Vibrationsdauer zu einer minimalen Frequenz am Ende der Vibrationsdauer entwickelt. Zusätzlich kann es auch von Vorteil sein, unabhängig davon andererseits die Vibration während der Vibrationsdauer mit einem Amplitudenverlauf durchzuführen, der sich von einer maximalen Amplitude zu Beginn der Vibrationsdauer zu einer minimalen Amplitude am Ende der Vibrationsdauer entwickelt, oder aber die Vibration während der Vibrationsdauer mit einem Amplitudenverlauf durchzuführen, der sich von einer minimalen Amplitude zu Beginn der Vibrationsdauer zu einer maximalen Amplitude am Ende der Vibrationsdauer entwickelt.

Durch diese Massnahmen können die Art der Lufteinschlüsse, wie z.B. grosse oder kleine, vorwiegend am Boden der Hohlform oder an der Oberfläche der Masse vorhandene Luftblasen berücksichtigt werden, wodurch eine effizientere Vergleichmässigung der Masse und deren effizientere Entlüftung ermöglicht wird.

Bei dem erfindungsgemässen Verfahren hat die anregende Vibrationsfrequenz etwa denselben Wert wie eine Resonanzfrequenz der flüssigen Masse in der Alveole, wobei die anregende Vibrationsfrequenz vorzugsweise mehrere Frequenzbereiche durchläuft, in denen eine Resonanzfrequenz der flüssigen Masse in der Alveole liegt. Zweckmässigerweise lässt man die anregende Vibrationsfrequenz bei ihrem Frequenzdurchlauf auf mindestens einer der Resonanzfrequenzen der flüssigen Masse während einer Zeitdauer verweilen, die einen Bruchteil der gesamten Vibrationsdauer darstellt.

Alternativ oder ergänzend kann die anregende Vibrationsfrequenz etwa denselben Wert wie eine Resonanzfrequenz der Alveole haben, wobei man insbesondere auch hier die anregende Vibrationsfrequenz mehrere Frequenzbereiche durchlaufen lassen kann, in denen eine Resonanzfrequenz der Alveole liegt. Zweckmässigerweise lässt man auch hier die anregende Vibrationsfrequenz bei ihrem Frequenzdurchlauf auf mindestens einer der Resonanzfrequenzen der Alveole während einer Zeitdauer verweilen, die einen Bruchteil der gesamten Vibrationsdauer darstellt.

Das Arbeiten mit Resonanzfrequenzen (Eigenfrequenzen) der flüssigen Masse und/oder der Alveole bzw. der Alveolen enthaltenden Form ermöglicht einen erheblichen Eintrag mechanischer Schwingungsenergie in die zu behandelnde flüssige Masse, wobei man für das "Austreiben" von Luftblasen bzw. Luftbläschen verschiedener Grösse verschiedene Resonanzfrequenzen der Masse und/oder der Alveole gezielt nutzen kann. Insbesondere kann auch gleichzeitig mit verschiedenen Frequenzen, insbesondere Resonanzfrequenzen, angeregt werden, wobei die eine Frequenz über die Luft und die andere Frequenz über die Alveole in die Masse eingetragen wird.

Bei einer weiteren bevorzugten Ausführung sind die Alveole und der Kühlkörper jeweils entlang einer gemeinsamen Symmetrieachse rotationssymmetrisch. Hier kann nach dem Befüllen der Alveole und vor dem Eintauchen des Kühlkörpers jede Alveole und die in ihr enthaltene fliessfähige temperierte Fettmasse während einer bestimmten Rotationsdauer um die Symmetrieachse in Rotation versetzt werden.

Da die Alveole vor dem Absenken des Kühlkörpers nur zu einem geringen Teil mit flüssiger Masse gefüllt ist, bildet die fliessfähige Masse unter Einwirkung der Zentrifugal- und Gravitationskraft im Innern der Alveole eine paraboloidförmige Oberfläche, die beachtlich grösser als die ebene Oberfläche der Masse ohne Rotation ist. Dadurch wird das Entlüften der flüssigen Masse vor allem dadurch begünstigt, dass die Luftblasen einerseits nur noch einen deutlich kürzeren Weg zur Oberfläche haben und andererseits ein stärkeres Kraftfeld im Innern der paraboloidförmig angeordneten flüssigen Masse herrscht, so dass die Luftblasen entlang der im Innern der Masse gekrümmten und senkrecht zur Oberfläche der Masse verlaufenden Kraftlinien bei gleichbleibender Viskosität der Masse viel schneller aus der Masse ausgetrieben werden als ohne Rotation. Man nutzt dabei die Tatsache, dass in der flüssigen Masse nach Erreichen der durch die Rotation und die Gravitation bedingten paraboloidförmigen Gleichgewichtsoberfläche die Kraftlinien der Massenkräfte (Schwerkraft + Fliehkraft) an allen Stellen der Oberfläche senkrecht zur Oberfläche und im Innern der flüssigen Masse zwar gekrümmt, aber dennoch in weiten Bereichen näherungsweise senkrecht zur Oberfläche verlaufen. Gleichzeitig und zusätzlich vorteilhaft wird aber auch die Masse schon in Vorbereitung des anschliessenden Kaltstempel- und Kristallisationsschritts im Sinne einer Annäherung an die gewünschte Schalenform vorverteilt. Dies ist zweckmässig und erwünscht, da dann während des Verdrängungsvorgangs und Formens der flüssigen Masse beim eigentlichen Kaltstempelschritt ein Grossteil der in der Hohlform enthaltenen Masse beim Fliessen in die endgültige Form nur noch kürzere Wege zurücklegen muss, was insgesamt zu einer besseren "Gleichbehandlung" aller Teile der Masse während des Abkühlens, Fliessens und Auskristallisierens führt.

Bei einer anderen weiteren Ausführung sind die Alveole und der Kühlkörper ebenfalls jeweils entlang einer gemeinsamen Symmetrieachse rotationssymmetrisch, und nach dem Befüllen der Alveole und vor dem Eintauchen des Kühlkörpers wird ein bezüglich der gemeinsamen Symmetrieachse von Alveole und Kühlkörper rotationssymmetrischer Luftstrom in die Alveole über der in ihr enthaltenen fliessfähigen temperierten Fettmasse während einer bestimmten Einblasdauer eingeblasen. Dies führt ähnlich wie bei der Rotation zu einer Vergrösserung der Oberfläche und einer die endgültige Schalenform annähernden Verteilung der flüssigen Masse mit ähnlichen Vorteilen.

Zweckmässigerweise wird die den Kühlkörper in dem Verfahren umgebende Luft ständig entfeuchtet, um eine Kondensierung von Wasserdampf am Kühlkörper zu verhindern. Die den Kühlkörper in dem Verfahren umgebende Luft kann auch zusätzlich ständig gekühlt werden,

Vorzugsweise hat die für das rotationssymmetrische Einblasen in die Alveole verwendete Luft dieselbe Temperatur wie die flüssige temperierte Masse in der Alveole. Dadurch wird verhindert, dass eine Abkühlung der Oberfläche der flüssigen Masse und eine vorzeitig einsetzende Kristallisation vor dem Absenken des Kühlkörpers stattfindet. Auch dies trägt zur "Gleichbehandlung" aller Bereiche der flüssigen Masse während des Kaltstempelschritts und damit zu einheitlicheren Produkten bei.

Zweckmässigerweise wird die für das rotationssymmetrische Einblasen in die Alveole verwendete Luft auch ständig entfeuchtet, um ein Eindringen von Wasser in die flüssige Masse zu minimieren.

Besonders vorteilhaft ist es, wenn der Taupunkt der Luft stets unter der Oberflächentemperatur des Kühlkörpers gehalten wird. Dadurch bleibt der Kühlkörper ständig trocken und behält seine die Schalen-Innenoberfläche definierende Oberfläche bei, wodurch Verfälschungen der inneren Schalenfläche verhindert werden. Auch die Hygiene wird verbessert, da auf einer kühlen und trockenen Oberfläche das Bakterienwachstum gehemmt ist.

Idealerweise wird die Oberfläche des Kühlkörpers auf einer Temperatur von weniger als -10°C gehalten.

Bei einer besonders bevorzugten Ausführung der erfindungsgemässen Vorrichtung ist das Vibrationsmittel mit der Alveole in geeigneter Weise derart gekoppelt, dass die Vibrationen auf die Hohlform übertragbar sind (Körperschallprinzip).

Bei einer weiteren bevorzugten Ausführung ist das Vibrationsmittel mit der Luft über der Alveole in geeigneter Weise derart gekoppelt, dass die Vibrationen auf die Luft übertragbar sind (Luftschallprinzip).

Zweckmässigerweise ist das Vibrationsmittel mit veränderbarer Frequenz und/oder veränderbarer Amplitude betreibbar.

Bei einer weiteren bevorzugten Ausführung sind die Hohlform und der Kühlkörper jeweils entlang einer gemeinsamen Symmetrieachse rotationssymmetrisch, und die Alveole ist um die Symmetrieachse rotierbar.

Bei einer weiteren bevorzugten Ausführung sind die Alveole und der Kühlkörper ebenfalls jeweils entlang einer gemeinsamen Symmetrieachse rotationssymmetrisch, wobei eine Druckluftquelle vorgesehen ist, die geeignet ist, einen bezüglich der gemeinsamen Symmetrieachse von Alveole und Kühlkörper rotationssymmetrischen Luftstrom in die Alveole einzublasen, wobei die Vorrichtung zweckmässigerweise einen Luftentfeuchter und/oder einen Luftheizer aufweist.

Besonders vorteilhaft ist es, wenn der Kühlkörper eine thermische Leitfähigkeit von mehr als 200 W/mK hat. Dies ermöglicht eine schnelle Abkühlung der fetthaltigen Masse mit besonders feinen Fettkristallen.

Weitere Vorteile, Merkmale und Anwendungsmöglichkeiten der Erfindung ergeben sich aus der nun folgenden Beschreibung eines Ausführungsbeispiels anhand der begleitenden Zeichnung, wobei:
- Fig. 1: ein Ablaufdiagramm des erfindungsgemässen Verfahrens zeigt bzw. eine schematische Darstellung der erfindungsgemässen Vorrichtung ist; und
- Fig. 2A, 2B, 2C: beispielhaft einige Rüttler bzw. Vibratoren schematisch zeigen.

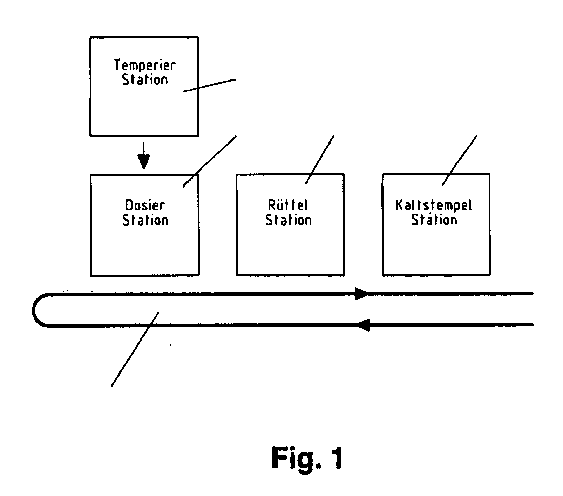

Fig. 1 zeigt schematisch die wesentlichen Elemente bzw. Verfahrensschritte einer erfindungsgemässen Kaltstempelanlage zur Herstellung von Schalen bzw. Hülsen aus einer fetthaltigen Schokoladenmasse. Die Anlage enthält eine Temperierstation 1, eine Dosierstation 2, eine Rüttelstation 3 sowie eine Kaltstempelstation 4. Ausserdem enthält sie eine Transporteinrichtung 5 zum Transportieren von mit flüssiger Schokoladenmasse zu befüllenden Formen (nicht gezeigt), in denen eine Vielzahl von Alveolen (konkave Vertiefungen) ausgebildet sind.

In der Temperierstation 1 wird die fetthaltige Schokoladenmasse in einem Temperaturbereich von ca. 28 bis 34°C temperiert. In diesem Temperaturbereich liegen stabile Triglyzerid-Kristalle der Kakaobutter vor. Sie dienen als Kristallisationskeime bei der späteren Abkühlung und Erstarrung der Schokoladenmasse. Die temperierte Schokoladenmasse wird über die Dosierstation 2 in dosierter Menge den durch die Transporteinrichtung 5 herantransportierten zu befüllenden Formen zugeführt.

Die mit flüssiger Schokoladenmasse in ihren Alveolen gefüllten Formen werden dann durch die Transporteinrichtung 5 zur Rüttelstation 3 weitertransportiert, in der die mit er Schokoladenmasse gefüllten Alveolen bzw. Formen für eine bestimmte Zeitdauer vibriert werden, um eine Gleichverteilung der noch flüssigen Schokoladenmasse in den Alveolen sowie eine Entlüftung der flüssigen Schokoladenmasse zu bewirken. Sobald der Rüttel- bzw. Vibrierschritt an der Rüttelstation 3 beendet ist, werden die mit der noch flüssigen Schokoladenmasse gefüllten Alveolen durch die Transporteinrichtung 5 zu der Kaltstempelstation 4 weitertransportiert.

In der Kaltstempelstation 4 wird in die mit flüssiger Schokoladenmasse gefüllten Alveolen jeweils ein tiefgekühlter Stempel aus einem gut wärmeleitenden Material und mit einer Temperatur unterhalb -10°C in die noch flüssige und Triglyzerid-Kristallisationskeime enthaltenden Schokoladenmasse eingetaucht, die sich dann in dem durch die Alveole und durch den in die Alveole eingetauchten Kaltstempel definierten schalenartigen Hohlraum verteilt und kurz darauf zu der gewünschten Schokoladenhülse erstarrt, woraufhin der Stempel wieder angehoben wird und die erstarrten Schokoladenschalen aus den Alveolen entnommen werden.

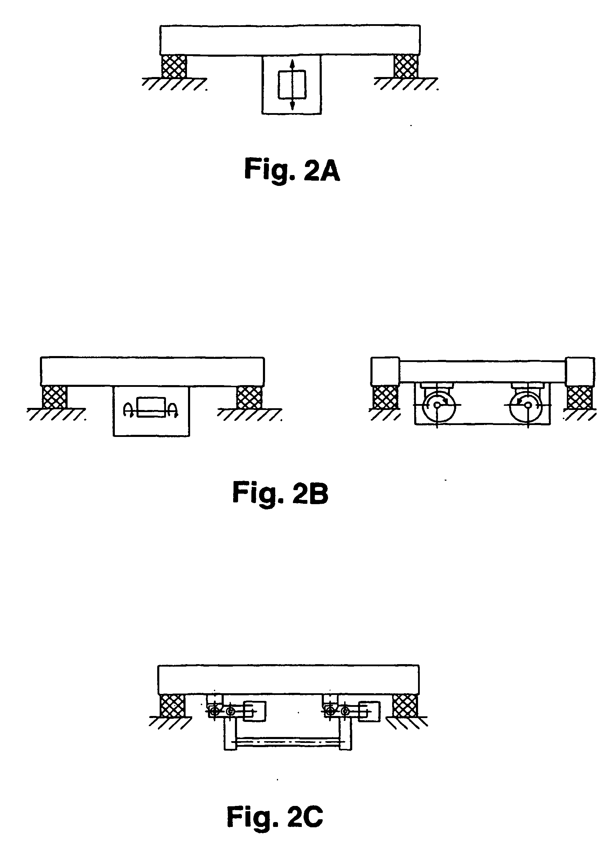

Fig. 2A, 2B, 2C zeigen beispielhaft einige Vorrichtungen, mit denen in der Rüttelstation 3 die mit flüssiger Schokoladenmasse dosiert befüllten Alveolen einer Form vibriert werden können. Der eigentliche Rüttler bzw. Vibrator 7, 8, 9 ist bei diesen Ausführungen mit einer Auflage 6, auf der die zu vibrierenden Formen mit den Alveolen abgesetzt werden, starr verbunden. Der Rüttler bzw. Vibrator 7, 8, 9 kann jedoch an jeder beliebigen Stellung eines starren Rahmens der Rüttelstation 3 befestigt sein. Als Rüttler bzw. Vibrator können z.B. ein Magnetvibrator 7 (Fig. 2A), ein Unwuchtrüttler 8 (Fig. 2B) oder ein Kolbenrüttler 9 (Fig. 2C) verwendet werden.

## Patentansprüche

1. Verfahren zur Herstellung eines schalenartig geformten Verzehrgutes aus einer
Fettmasse, insbesondere einer kakaohaltigen bzw. schokoladeartigen Fettmasse, welches die folgenden Schritte aufweiset :
- dosiertes Befüllen einer die Aussenfläche des schalenartigen Verzehrgutes bestimmenden Alveole einer Form mit der Fettmasse im fliessfähigen temperierten Zustand, wobei die Temperatur der Form unterhalb der Temperatur der temperierten Fettmasse liegt ;
- Eintauchen eines die Innenfläche des schalenartigen Verzehrgutes bestimmenden
Kühlkörpers in die fliessfähige temperierte Fettmasse in der Alveole, wobei die
Temperatur des Kühlkörpers unterhalb der Schmelztemperatur der temperierten
Fettmasse liegt, so dass sich die noch fliessfähige Fettmasse in dem Zwischenraum zwischen Alveole und Kühlkörper verteilt ;
- Halten des Kühlkörpers in seiner in der Fettmasse eingetauchten Stellung über eine bestimmte Zeitdauer, bis die Fettmasse in dem Zwischenraum erstarrt ist, wobei nach dem Befüllen der Alveole und vor dem Eintauchen des Kühlkörpers die fliessfähige temperierte Fettmasse während einer bestimmten Vibrationsdauer in Vibration versetzt wird,
**dadurch gekennzeichnet, dass**
die anregende Vibrationsfrequenz etwa denselben Wert wie eine Resonanzfrequenz der flüssigen Masse in der Alveole hat.

2. Verfahren nach Anspruch 1, **dadurch gekennzeichnet, dass** die Vibration der fliessfähigen temperierten Fettmasse in den Alveolen der Form durch Vibrieren der Form erzeugt wird.

3. Verfahren nach Anspruch 1, **dadurch gekennzeichnet, dass** die Vibration der fliessfähigen temperierten Fettmasse in der Alveole durch Vibrieren der Luft über der Alveole erzeugt wird.

4. Verfahren nach einem der Ansprüche 1 bis 3, **dadurch gekennzeichnet, dass** die
Vibration während der Vibrationsdauer mit einem Frequenzverlauf durchgeführt wird, der sich von einer minimalen Frequenz zu Beginn der Vibrationsdauer zu einer maximalen Frequenz am Ende der Vibrationsdauer entwickelt.

5. Verfahren nach einem der Ansprüche 1 bis 3, **dadurch gekennzeichnet, dass** die
Vibration während der Vibrationsdauer mit einem Frequenzverlauf durchgeführt wird, der sich von einer maximalen Frequenz zu Beginn der Vibrationsdauer zu einer minimalen Frequenz am Ende der Vibrationsdauer entwickelt.

6. Verfahren nach einem der Ansprüche 1 bis 5, **dadurch gekennzeichnet, dass** die
Vibration während der Vibrationsdauer mit einem Amplitudenverlauf durchgeführt wird, der sich von einer maximalen Amplitude zu Beginn der Vibrationsdauer zu einer minimalen Amplitude am Ende der Vibrationsdauer entwickelt.

7. Verfahren nach einem der Ansprüche 1 bis 5, **dadurch gekennzeichnet, dass** die
Vibration während der Vibrationsdauer mit einem Amplitudenverlauf durchgeführt wird, der sich von einer minimalen Amplitude zu Beginn der Vibrationsdauer zu einer maximalen Amplitude am Ende der Vibrationsdauer entwickelt.

8. Verfahren nach einem der vorhergehenden Ansprüche, **dadurch gekennzeichnet, dass** die anregende
Vibrationsfrequenz mehrere Frequenzbereiche durchläuft, in denen eine Resonanzfrequenz der flüssigen Masse in der Alveole liegt.

9. Verfahren nach Anspruch 8, **dadurch gekennzeichnet, dass** die anregende Vibrationsfrequenz bei ihrem Frequenzdurchlauf auf mindestens einer der Resonanzfrequenzen der flüssigen Masse während einer Zeitdauer verweilt, die einen Bruchteil der gesamten Vibrationsdauer darstellt.

10. Verfahren nach einem der vorhergehenden Ansprüche, **dadurch gekennzeichnet, dass** die anregende
Vibrationsfrequenz etwa denselben Wert wie eine Resonanzfrequenz der Alveole hat.

11. Verfahren nach einem der vorhergehenden Ansprüche, **dadurch gekennzeichnet, dass** die anregende
Vibrationsfrequenz mehrere Frequenzbereiche durchläuft, in denen eine Resonanzfrequenz der Alveole liegt.

12. Verfahren nach Anspruch 12, **dadurch gekennzeichnet, dass** die anregende Vibrationsfrequenz bei ihrem Frequenzdurchlauf auf mindestens einer der Resonanzfrequenzen der Alveole während einer Zeitdauer verweilt, die einen Bruchteil der gesamten Vibrationsdauer darstellt.

13. Verfahren nach einem der Ansprüche 1 bis 12, **dadurch gekennzeichnet, dass** die
Alveole und der Kühlkörper jeweils entlang einer gemeinsamen Symmetrieachse rotationssymmetrisch sind und dass nach dem Befüllen der Alveole und vor dem Eintauchen des Kühlkörpers die Alveole und die in ihr enthaltene fliessfähige temperierte Fettmasse während einer bestimmten Rotationsdauer um die Symmetrieachse in Rotation versetzt wird.

14. Verfahren nach einem der Ansprüche 1 bis 13, **dadurch gekennzeichnet, dass** die
Alveole und der Kühlkörper jeweils entlang einer gemeinsamen Symmetrieachse rotationssymmetrisch sind und dass nach dem Befüllen der Alveole und vor dem Eintauchen des Kühlkörpers ein bezüglich der gemeinsamen Symmetrieachse von
Alveole und Kühlkörper rotationssymmetrischer Luftstrom in die Alveole über der in ihr enthaltenen fliessfähigen temperierten Fettmasse während einer bestimmten Einblasdauer eingeblasen wird.

15. Verfahren nach einem der vorhergehenden Ansprüche, **dadurch gekennzeichnet, dass** die den Kühlkörper in dem Verfahren umgebende Luft ständig entfeuchtet wird.

16. Verfahren nach einem der vorhergehenden Ansprüche, **dadurch gekennzeichnet, dass** die den Kühlkörper in dem Verfahren umgebende Luft ständig gekühlt wird.

17. Verfahren nach einem der Ansprüche 13 bis 16, **dadurch gekennzeichnet, dass** die für das rotationssymmetrische Einblasen in die Alveole verwendete Luft etwa dieselbe Temperatur wie die flüssige temperierte Masse in der Alveole hat.

18. Verfahren nach einem der Ansprüche 13 bis 17, **dadurch gekennzeichnet, dass** die für das rotationssymmetrische Einblasen in die Alveole verwendete Luft ständig entfeuchtet wird.

19. Verfahren nach einem der Ansprüche 13 bis 18, **dadurch gekennzeichnet, dass** der Taupunkt der Luft unter der Oberflächentemperatur des Kühlkörpers gehalten wird.

20. Verfahren nach einem der vorhergehenden Ansprüche, **dadurch gekennzeichnet, dass** die Oberfläche des Kühlkörpers auf einer Temperatur von weniger als-10 C gehalten wird.

21. Vorrichtung zur Herstellung eines schalenartig geformten Verzehrgutes aus einer
Fettmasse, insbesondere einer kakaohaltigen bzw. schokoladeartigen Fettmasse, wobei die Vorrichtung die folgenden Mittel aufweist :
- eine Form mit mindestens einer Alveole, deren Innenfläche die Aussenfläche des herzustellenden schalenartigen Verzehrgutes bestimmt ;
- ein Dosiermittel zum Befüllen der Alveole mit der Fettmasse im fliessfähigen temperierten Zustand ;
- einen in die Alveole absenkbaren Kühlkörper, dessen Aussenfläche die Innenfläche des herzustellenden schalenartigen Verzehrgutes bestimmt ;
- Absenkmittel zum Eintauchen des Kühlkörpers in die fliessfähige temperierte
Fettmasse in der Alveole,
- ein Vibrationsmittel, mit dem die Fettmasse in Vibration versetzt werden kann, **dadurch gekennzeichnet, dass** das Vibrationsmittel mit veränderbarer Frequenz betreibbar ist und das Vibrationsmittel so ausgelegt ist, dass die Vibrationsfrequenz mehrere Frequenzbereiche durchlaufen kann, in denen eine Resonanzfrequenz der Form mit der mindestens einen Alveole liegt.

22. Vorrichtung nach Anspruch 21, **dadurch gekennzeichnet, dass** das Vibrationsmittel mit der Alveole in geeigneter Weise derart gekoppelt ist, dass die Vibrationen auf die Alveole übertragbar sind.

23. Vorrichtung zur Herstellung eines schalenartig geformten Verzehrgutes aus einer
Fettmasse, insbesondere einer kakaohaltigen bzw. schokoladeartigen Fettmasse, wobei die Vorrichtung die folgenden Mittel aufweist :
- eine Alveole, deren Innenfläche die Aussenfläche des herzustellenden schalenartigen Verzehrgutes bestimmt ;
- ein Dosiermittel zum Befüllen der Alveole mit der Fettmasse im fliessfähigen temperierten Zustand ;
- einen in die Alveole absenkbaren Kühlkörper, dessen Aussenfläche die Innenfläche des herzustellenden schalenartigen Verzehrgutes bestimmt ;
- Absenkmittel zum Eintauchen des Kühlkörpers in die fliessfähige temperierte Fettmasse in der Alveole,
- ein Vibrationsmittel, mit dem die Fettmasse in Vibration versetzt werden kann,
**dadurch gekennzeichnet, dass**
das Vibrationsmittel mit veränderbarer Frequenz betreibbar ist und dass das Vibrationsmittel mit der Luft über der Alveole in geeigneter Weise derart gekoppelt ist, dass die Vibrationen auf die Luft und dann über die luft auf die Fettmasse in der Alveole übertragbar sind.

24. Vorrichtung nach einem der Ansprüche 21 oder 23, **dadurch gekennzeichnet, dass** das Vibrationsmittel mit veränderbarer Amplitude betreibbar ist.

25. Vorrichtung nach einem der Ansprüche 21 bis 24, **dadurch gekennzeichnet, dass** die Alveole und der Kühlkörper jeweils entlang einer gemeinsamen Symmetrieachse rotationssymmetrisch sind und dass die Alveole um die Symmetrieachse rotierbar ist.

26. Vorrichtung nach Anspruch 25, **dadurch gekennzeichnet, dass** die rotationssymmetrische Alveole durch einen an ihr anliegenden angetriebenen Zahnriemen rotierbar ist.

27. Vorrichtung nach einem der Ansprüche 21 bis 26, **dadurch gekennzeichnet, dass** die Alveole und der Kühlkörper jeweils entlang einer gemeinsamen Symmetrieachse rotationssymmetrisch sind und dass eine Druckluftquelle vorgesehen ist, die geeignet ist, einen bezüglich der gemeinsamen Symmetrieachse von Alveole und Kühlkörper rotationssymmetrischen Luftstrom in die Alveole einzublasen.

28. Vorrichtung nach einem der vorhergehenden Ansprüche 21 bis 27, **dadurch gekennzeichnet, dass** sie einen Luftentfeuchter aufweist.

29. Vorrichtung nach einem der vorhergehenden Ansprüche 21 bis 28, **dadurch gekennzeichnet, dass** sie einen Luftheizer für den rotationssymmetrischen Luftstrom aufweist.

30. Vorrichtung nach einem der vorhergehenden Ansprüche 21 bis 29, **dadurch gekennzeichnet, dass** der Kühlkörper eine thermische Leitfähigkeit von mehr als 200 W/mK hat.

## Claims

1. A method for producing a bowl-shaped comestible from a fatty mass, particularly a cocoa-containing or chocolate-like fatty mass, including the following steps:
➢ metered filling of a sac of a form that defines the outer surface of the bowl-shaped comestible with the fatty mass in flowable, tempered condition, wherein the temperature of the form is lower than the temperature of the tempered fatty mass;
➢ immersing a cooling element defining the inner surface of the bowl-shaped comestible in the flowable, tempered fatty mass in the sac, wherein the temperature of the cooling element is below the melting temperature of the tempered fatty mass, so that the still flowable fatty mass is distributed in the cavity between the sac and the cooling element;
➢ retaining the cooling element in its immersed position in the fatty mass for a given period, until the fatty mass is solidified in the cavity,
wherein the flowable, tempered fatty mass is caused to vibrate for a given vibration period after the sac is filled and before the cooling element is immersed, **characterised in that** the agitating vibration frequency has roughly the same value as a resonant frequency of the liquid mass in the sac.

2. The method as cited in claim 1, **characterised in that** the vibration of the flowable, tempered fatty mass in the sacs of the form is created by vibration of the form.

3. The method as cited in claim 1, **characterised in that** the vibration of the flowable, tempered fatty mass in the sac is created by vibration of the air above the sac.

4. The method as cited in any of claims 1 to 3, **characterised in that** the vibration throughout the vibration period is performed with a frequency response characteristic that develops from a minimum frequency at the start of the vibration period to a maximum frequency at the end of the vibration period.

5. The method as cited in any of claims 1 to 3, **characterised in that** the vibration throughout the vibration period is performed with a frequency response characteristic that develops from a maximum frequency at the start of the vibration period to a minimum frequency at the end of the vibration period.

6. The method as cited in any of claims 1 to 5, **characterised in that** the vibration throughout the vibration period is performed with an amplitude response characteristic that develops from a maximum amplitude at the start of the vibration period to a minimum amplitude at the end of the vibration period.

7. The method as cited in any of claims 1 to 5, **characterised in that** the vibration throughout the vibration period is performed with an amplitude response characteristic that develops from a minimum amplitude at the start of the vibration period to a maximum amplitude at the end of the vibration period.

8. The method as cited in any of the preceding claims, **characterised in that** the agitating vibration frequency passes through several frequency ranges that include a resonant frequency of the liquid mass in the sac.

9. The method as cited in claim 8, **characterised in that** as it passes through various requencies, the agitating vibration frequency pauses for a period representing a fraction of the overall vibration period on at least one of the resonant frequencies of the fatty mass.

10. The method as cited in any of the preceding claims, **characterised in that** the agitating vibration frequency has approximately the same value as a resonant frequency of the sac.

11. The method as cited in any of the preceding claims, **characterised in that** the agitating vibration frequency passes through multiple frequency ranges that include a resonant frequency of the sac.

12. The method as cited in claim 11, **characterised in that** as it passes through various frequencies, the agitating vibration frequency pauses for a period representing a fraction of the overall vibration period on at least one of the resonant frequencies of the sac.

13. The method as cited in any of claims 1 to 12, **characterised in that** the sac and the cooling element are each rotationally symmetrical along a common axis of symmetry, and that the sac and the flowable, tempered fatty mass contained therein are induced to rotate about the axis of symmetry for a given rotation period after the sac has been filled and before the cooling element is immersed.

14. The method as cited in any of claims 1 to 13, **characterised in that** the sac and the cooling element are each rotationally symmetrical along a common axis of symmetry, and that an air jet that is rotationally symmetrical relative to the shared axis of symmetry of the sac and the cooling element is blown into the sac over the flowable flowable, tempered fatty mass contained therein for a given aspiration period after the sac has been filled and before the cooling element is immersed.

15. The method as cited in any of the preceding claims, **characterised in that** the air surrounding the cooling element in the method is constantly dehumidified.

16. The method as cited in any of the preceding claims, **characterised in that** the air surrounding the cooling element in the method is constantly cooled.

17. The method as cited in any of claims 13 to 16, **characterised in that** the air used for blowing into the sac in rotationally symmetrical manner has approximately the same temperature as the flowable, tempered mass in the sac.

18. The method as cited in any of claims 13 to 17, **characterised in that** the air used for blowing into the sac in rotationally symmetrical manner is constantly dehumidified.

19. The method as cited in any of claims 13 to 18, **characterised in that** the dew point of the air is kept below the surface temperature of the cooling element.

20. The method as cited in any of the preceding claims, **characterised in that** the surface of the cooling element is maintained at a temperature lower than -10 °C.

21. A device for producing a bowl-shaped comestible from a fatty mass, particularly a cocoa-containing or chocolate-like fatty mass, wherein the device includes the following means:
➢ a form with at least one sac, the inner surface of which defines the outer surface of the bowl-shaped comestible to be produced;
➢ a metering means for filling the sac with the fatty mass in the flowable, tempered condition;
➢ a cooling element capable of being lowered into the sac, the outer surface of which defines the inner surface of the bowl-shaped comestible to be produced,
➢ lowering means for immersing the cooling element in the flowable, tempered fatty mass in the sac;
➢ a means for producing vibration, via which the fatty mass is able to be induced to vibrate,
**characterised in that** the vibration means is operable with variable frequency and the vibration means are construed such that the vibration frequency may pass through several frequency ranges that include a resonance frequency of the form with the at least one sac.

22. The device as cited in claim 21, **characterised in that** the vibration means is suitably coupled to the sac in such manner that the vibrations are transferrable to the sac.

23. A device for producing a bowl-shaped comestible from a fatty mass, particularly a cocoa-containing or chocolate-like fatty mass, wherein the device includes the following means:
➢ a sac, the inner surface of which defines the outer surface of the bowl-shaped comestible to be produced;
➢ a metering means for filling the sac with the fatty mass in the flowable, tempered condition;
➢ a cooling element capable of being lowered into the sac, the outer surface of which defines the inner surface of the bowl-shaped comestible to be produced,
➢ lowering means for immersing the cooling element in the flowable, tempered fatty mass in the sac;
➢ a means for producing vibration, via which the fatty mass is able to be induced to vibrate,
**characterised in that** the vibration means is operable with variable frequency and that the vibration means is suitably coupled to the air above the sac in such manner that the vibrations are transferrable to the air and via the air to the fatty liquid in the sac.

24. The device as cited in any of claims 21 to 23, **characterised in that** the vibration means is operable with variable amplitude.

25. The device as cited in any of claims 21 to 24, **characterised in that** the sac and the cooling element are each rotationally symmetrical along a shared axis of symmetry, and that the sac is rotatable about the axis of symmetry.

26. The device as cited in claim 25, **characterised in that** the rotationally symmetrical sac is rotatable via an adjacently arranged driven toothed belt.

27. The device as cited in any of claims 21 to 26, **characterised in that** the sac and the cooling element are each rotationally symmetrical along a common axis of symmetry, and that a source of compressed air is provided that is suitable for blowing in an air jet that is rotationally symmetrical relative to the shared axis of symmetry of the sac and the cooling element.

28. The device as cited in any of the preceding claims, **characterised in that** it includes an air dehumidifier.

29. The device as cited in any of the preceding claims, **characterised in that** it includes an air heater for the rotationally symmetrical air stream.

30. The device as cited in any of the preceding claims, **characterised in that** the cooling element has a thermal conductivity of more than 200 W/mK.

## Revendications

1. Procédé de fabrication d'un produit de consommation moulé en forme de coque à partir d'une masse grasse, notamment une masse grasse contenant du cacao ou de type chocolat, comprenant les étapes suivantes :
- remplissage dosé d'une alvéole d'un moule définissant le produit de consommation en forme de coque avec la masse grasse à l'état fluide et tempéré, la température du moule se situant en dessous de la température de la masse grasse tempérée ;
- plongée d'un corps de refroidissement délimitant la surface intérieure du produit de consommation en forme de coque dans la masse grasse fluide tempérée de l'alvéole, la température du corps de refroidissement se situant en dessous de la température de fusion de la masse grasse tempérée, de sorte que la masse grasse encore fluide se répartit dans l'intervalle entre l'alvéole et le corps de refroidissement ;
- maintien du corps de refroidissement dans sa position plongée dans la masse grasse pendant une certaine durée, jusqu'à ce que la masse grasse de l'intervalle soit solidifiée,
dans lequel, après le remplissage de l'alvéole et avant d'y plonger le corps de refroidissement, la masse grasse fluide tempérée est mise en vibration pendant une certaine durée de vibration, **caractérisé en ce que** la fréquence vibratoire d'excitation a approximativement la même valeur qu'une fréquence de résonance de la masse liquide dans l'alvéole.

2. Procédé selon la revendication 1, **caractérisé en ce que** la vibration de la masse grasse fluide tempérée des alvéoles du moule est générée en faisant vibrer le moule.

3. Procédé selon la revendication 1, **caractérisé en ce que** la vibration de la masse grasse fluide tempérée de l'alvéole est générée en faisant vibrer l'air au dessus de l'alvéole.

4. Procédé selon une des revendications 1 à 3, **caractérisé en ce que** la vibration est assurée pendant la durée de vibration avec une évolution de fréquence qui va d'une fréquence minimale au début de la durée de vibration à une fréquence maximale à la fin de la durée de vibration.

5. Procédé selon une des revendications 1 à 3, **caractérisé en ce que** la vibration est assurée pendant la durée de vibration avec une évolution de fréquence qui va d'une fréquence maximale au début de la durée de vibration à une fréquence minimale à la fin de la durée de vibration.

6. Procédé selon une des revendications 1 à 5, **caractérisé en ce que** la vibration est assurée pendant la durée de vibration avec une évolution d'amplitude qui va d'une amplitude maximale au début de la durée de vibration à une amplitude minimale à la fin de la durée de vibration.

7. Procédé selon une des revendications 1 à 5, **caractérisé en ce que** la vibration est assurée pendant la durée de vibration avec une évolution d'amplitude qui va d'une amplitude minimale au début de la durée de vibration à une amplitude maximale à la fin de la durée de vibration.

8. Procédé selon une des revendications précédentes, **caractérisé en ce que** la fréquence vibratoire d'excitation passe par plusieurs plages de fréquence dans lesquelles se trouve une fréquence de résonance de la masse liquide contenue dans l'alvéole.

9. Procédé selon la revendication 8, **caractérisé en ce que** la fréquence vibratoire d'excitation, lors de son évolution de fréquence, reste à au moins une des fréquences de résonance de la masse liquide pendant une durée qui représente une fraction de la durée de vibration totale.

10. Procédé selon une des revendications précédentes, **caractérisé en ce que** la fréquence vibratoire d'excitation a approximativement la même valeur qu'une fréquence de résonance de l'alvéole.

11. Procédé selon une des revendications précédentes, **caractérisé en ce que** la fréquence vibratoire d'excitation passe par plusieurs plages de fréquence où se situe une fréquence de résonance de l'alvéole.

12. Procédé selon la revendication 11, **caractérisé en ce que** la fréquence vibratoire d'excitation, lors de son évolution de fréquence, reste à au moins une des fréquences de résonance de l'alvéole pendant une durée qui représente une fraction de la durée de vibration totale.

13. Procédé selon une des revendications 1 à 12, **caractérisé en ce que** l'alvéole et le corps de refroidissement sont chacun symétriques en rotation le long d'un axe de symétrie commun et qu'après le remplissage de l'alvéole et avant d'y plonger le corps de refroidissement, l'alvéole et la masse grasse fluide tempérée qu'elle contient sont mises en rotation pendant une certaine durée de rotation autour de l'axe de rotation.

14. Procédé selon une des revendications 1 à 13, **caractérisé en ce que** l'alvéole et le corps de refroidissement sont chacun symétriques en rotation le long d'un axe de symétrie commun et qu'après le remplissage de l'alvéole et avant d'y plonger le corps de refroidissement, un courant d'air symétrique en rotation par rapport à l'axe de symétrie commun de l'alvéole et du corps de refroidissement est soufflé dans l'alvéole au dessus de la masse grasse fluide tempérée qu'elle contient pendant une certaine durée de soufflage.

15. Procédé selon une des revendications précédentes, **caractérisé en ce que** l'air entourant le corps de refroidissement dans le procédé est déshumidifié en permanence.

16. Procédé selon une des revendications précédentes, **caractérisé en ce que** l'air entourant le corps de refroidissement dans le procédé est refroidi en permanence.

17. Procédé selon une des revendications 13 à 16, **caractérisé en ce que** l'air utilisé pour le soufflage symétrique en rotation dans l'alvéole a approximativement la même température que la masse tempérée liquide contenue dans l'alvéole.

18. Procédé selon une des revendications 13 à 17, **caractérisé en ce que** l'air utilisé pour le soufflage symétrique en rotation dans l'alvéole est déshumidifié en permanence.

19. Procédé selon une des revendications 13 à 18, **caractérisé en ce que** le point de condensation de l'air est maintenu en dessous de la température de surface du corps de refroidissement.

20. Procédé selon une des revendications précédentes, **caractérisé en ce que** la surface du corps de refroidissement est maintenue à une température inférieure à - 10° C.

21. Dispositif de fabrication d'un produit de consommation moulé en forme de moule à partir d'une masse grasse, notamment d'une masse grasse contenant du cacao ou de type chocolat, le dispositif présentant les moyens suivants :
- un moule avec au moins une alvéole dont la surface intérieure détermine la surface extérieure du produit de consommation en forme de coque à fabriquer ;
- un moyen de dosage pour remplir l'alvéole de masse grasse à l'état fluide tempéré ;
- un corps de refroidissement pouvant être enfoncé dans l'alvéole et dont la surface extérieure détermine la surface intérieure du produit de consommation en forme de coque à fabriquer ;
- des moyens d'enfoncement pour plonger le corps de refroidissement dans la masse grasse à l'état fluide tempéré dans l'alvéole ;
- un moyen vibratoire qui permet de mettre la masse grasse en vibration,
**caractérisé en ce que** le moyen vibratoire peut fonctionner à une fréquence variable et que le moyen vibratoire est arrangé de façon que la fréquence vibratoire d'excitation peut passer par plusieurs plages de fréquence dans lesquelles se situe une fréquence de résonance du moule avec la au moins une alvéole.

22. Dispositif selon la revendication 21, **caractérisé en ce que** le moyen vibratoire est couplé à l'alvéole de façon adéquate pour que les vibrations puissent se communiquer à l'alvéole.

23. Dispositif de fabrication d'un produit de consommation moulé en forme de moule à partir d'une masse grasse, notamment d'une masse grasse contenant du cacao ou de type chocolat, le dispositif présentant les moyens suivants :
- une alvéole dont la surface intérieure détermine la surface extérieure du produit de consommation en forme de coque à fabriquer ;
- un moyen de dosage pour remplir l'alvéole de masse grasse à l'état fluide tempéré;
- un corps de refroidissement pouvant être enfoncé dans l'alvéole et dont la surface extérieure détermine la surface intérieure du produit de consommation en forme de coque à fabriquer;
- des moyens d'enfoncement pour plonger le corps de refroidissement dans la masse grasse à l'état fluide tempéré dans l'alvéole;
- un moyen vibratoire qui permet de mettre la masse grasse en vibration,
**caractérisé en ce que** le moyen vibratoire peut fonctionner à une fréquence variable et que le moyen vibratoire est couplé à l'air au dessus de l'alvéole de façon adéquate pour à ce les vibrations puissent se communiquer à l'air et ensuite par l'air à la masse grasse dans l'alvéole.

24. Dispositif selon une des revendications 21 à 23, **caractérisé en ce que** le moyen vibratoire peut fonctionner avec une amplitude variable.

25. Dispositif selon une des revendications 21 à 24, **caractérisé en ce que** l'alvéole et le corps de refroidissement sont chacun symétriques en rotation le long d'un axe de symétrie commun et que l'alvéole peut tourner autour de l'axe de symétrie.

26. Dispositif selon la revendication 25, **caractérisé en ce que** l'alvéole symétrique en rotation peut tourner grâce à une courroie à créneaux entraînée en contact avec elle.

27. Dispositif selon une des revendications 21 à 26, **caractérisé en ce que** l'alvéole et le corps de refroidissement sont chacun symétriques en rotation le long d'un axe de symétrie commun et qu'il est prévu une source d'air comprimé qui est apte à souffler un courant d'air symétrique en rotation par rapport à l'axe de symétrie commun de l'alvéole et du corps de refroidissement dans l'alvéole.

28. Dispositif selon une des revendications précédentes, **caractérisé en ce qu'**il présente un déshumidificateur d'air.

29. Dispositif selon une des revendications précédentes, **caractérisé en ce qu'**il présente un appareil de chauffage d'air pour le courant d'air symétrique en rotation.

30. Dispositif selon une des revendications précédentes, **caractérisé en ce que** le corps de refroidissement a une conductibilité thermique de plus de 200 W/mK.
